# FASCICULE DE BREVET EUROPEEN

(11) **EP 3 217 059 B1**
(45) Date de publication et mention de la délivrance du brevet: **12.12.2018**
(21) Numéro de dépôt: 17159386.6
(22) Date de dépôt: 06.03.2017
(51) Int. Cl.: F16L 23/00, F16L 23/04, F16L 23/08

(54) **SYSTÈME DE SERRAGE COMPRENANT UN COLLIER ET DES CLIPS INDIVIDUELS DE PRÉ-MONTAGE**
SPANNANORDNUNG MIT EINER SPANNSCHELLE UND EINZELNE VORMONTAGECLIPS
TIGHTENING SYSTEM COMPRISING A COLLAR AND ISOLATED PRE-MOUNTING CLIPS

(30) Priorité: 07.03.2016 FR 1651881
(43) Date de publication de la demande: 13.09.2017
(73) Titulaire: Etablissements Caillau, 92130 Issy-les-Moulineaux (FR)
(72) Inventeur: VOSGEOIS, Cyril, 41200 ROMORANTIN (FR); PREVOT, Fabrice, 41130 SELLES-SUR-CHER (FR); RIGOLLET, Nicolas, 41200 ROMORANTIN (FR); GOULET, Patrick, 41130 GIEVRES (FR)
(74) Mandataire: Intès, Didier Gérard André

(56) Documents cités:
- EP-A1- 2 598 785
- DE-A1- 19 838 588

## Description

Le présent exposé concerne un système de serrage pour le raccordement étanche de deux tubes dont les extrémités en regard présentent des surfaces de serrage faisant saillie par rapport à la surface extérieure cylindrique desdits tubes, le système comprenant un collier ayant une bande apte à coopérer avec lesdites surfaces de serrage et des moyens pour serrer ladite bande, la bande présentant un premier et un deuxième flanc entre lesquels est délimité un renfoncement interne apte à recevoir les surfaces de serrage.

Un système de serrage de ce type est connu par le brevet européen n° EP 1 451 498. La section de la bande du collier est par exemple sensiblement en forme de V ou de U, de façon que les ailes formées par cette section prennent respectivement appui sur la surface de serrage du premier tube et sur celle du deuxième tube. Ainsi, le serrage du collier tend à maintenir les tubes serrés l'un contre l'autre. La section en forme de V est intéressante dans la mesure où, lors du serrage du collier, elle rapproche les tubes l'un de l'autre.

Les moyens pour serrer la bande du collier comprennent par exemple un système à vis. Ainsi, les extrémités de la bande peuvent être redressées de manière à former des pattes d'appui munies de perçages dans lesquels peut être insérée une vis. La tête de la vis est retenue par rapport à l'une de ces pattes, tandis qu'un écrou est retenu par rapport à l'autre patte, de sorte que la rotation relative entre la vis et l'écrou entraine le serrage de la bande. Toutefois, d'autres moyens de serrage peuvent être prévus, par exemple du type fonctionnant par accrochage, en particulier du type comprenant un crochet redressé par rapport à la bande et une oreille également redressée par rapport à la bande, le crochet s'accrochant derrière l'oreille pour maintenir le collier à l'état serré. Dans EP 1 451 498, le système de serrage comporte en outre une rondelle qui est solidarisée au collier grâce à des pattes de fixation que comporte la rondelle, cette rondelle présentant par ailleurs des pattes qui sont aptes à s'agripper sur le premier tube lorsque le collier est pré-monté à l'extrémité de ce premier tube. Au sens de la présente description, "pré-monté" signifie que le tube est simplement emmanché à l'intérieur du collier, sans que ce dernier ne soit serré. Ainsi, le fait de retenir le collier à l'état pré-monté autour de l'extrémité du premier tube permet de le mettre en attente avant d'abouter les deux tubes et de serrer la bande du collier autour de leurs extrémités assemblées.

Le brevet européen n° EP 2 598 785 propose quant à lui d'équiper le système avec des premier et des deuxième moyens de pré-montage pour pré-monter le collier sur les premier et deuxième tubes, une fois qu'ils ont été rapprochés l'un de l'autre et emmanchés dans le collier. Ceci permet de réaliser le serrage de la bande sans avoir à maintenir les deux tubes en position. Dans ce brevet, les premier et deuxième moyens de pré-montage peuvent être formés sur une seule rondelle portée par la bande du collier, en particulier par son premier flanc, ou bien par deux rondelles, à savoir une première rondelle analogue à celle du système du brevet EP 1 451 498, portée par le premier flanc, et une deuxième rondelle portée par le deuxième flanc.

Les dispositifs précités apportent globalement satisfaction, mais ils imposent de recourir à une ou deux rondelles pour réaliser le pré-montage. Ces rondelles ayant une périphérie interne analogue à celle du collier, elles représentent une quantité de matériau relativement importante. De plus, leur géométrie est relativement complexe pour qu'elles puissent à la fois être correctement maintenues par rapport à la bande du collier sur l'intégralité de leur périphérie, et correctement retenir par rapport au collier les extrémités des tubes respectifs avec lesquelles elles coopèrent. Par ailleurs, dans certains cas, la rondelle doit également assurer une autre fonction que celle du pré-montage, par exemple une fonction d'étanchéité. Dans certains cas, cette fonction ne peut être assurée que si la rondelle présente une épaisseur précise, qui n'est pas toujours compatible avec l'élasticité que devraient avoir les pattes de pré-montage pour correctement assurer leur fonction, étant entendu que ces pattes présentent en principe la même épaisseur que la rondelle puisqu'elles sont réalisées à partir d'un même feuillard.

On connaît également le brevet US 7 770 937 qui, dans le cas particulier d'un assemblage à rotule, préconise, pour réaliser le pré-montage, soit de souder sur l'un des tubes une patte axiale retenue par rapport à la bande du collier, soit de souder sur la bande du collier une agrafe qui s'étend sur une partie de la circonférence de cette bande et qui présente des doigts venant s'accrocher derrière la surface de serrage de l'un des tubes. Ce brevet suggère également d'utiliser des doigts individuels fixés à la bande de manière à former des extensions qui s'étendent par rapport au bord de cette bande et peuvent venir s'accrocher sur la surface de serrage d'un tube. Ces doigts individuels sont seulement externes à la bande et, comme l'agrafe, ils sont soudés sur la périphérie externe de la bande. Ainsi, les moyens de pré-montage que propose ce brevet US 7 770 937 sont relativement encombrants extérieurement au collier et présentent l'inconvénient de nécessiter une opération de soudure soit sur la périphérie externe du collier, soit sur l'un des tubes. Cette opération nécessite bien entendu que le matériel ad-hoc soit à disposition, soit sur la ligne de fabrication du collier, soit sur la ligne d'assemblage du collier avec les tubes. La soudure est une opération très distincte des autres opérations de fabrication du collier ou d'assemblage avec les tubes et peut endommager la surface des pièces concernées.

La présente description vise à améliorer l'état de la technique précité.

Ainsi, le présent exposé concerne un système de serrage pour le raccordement étanche de deux tubes dont les extrémités en regard présentent des surfaces de serrage faisant saillie par rapport à la surface extérieure cylindrique desdits tubes, le système comprenant un collier ayant une bande apte à coopérer avec lesdites surfaces de serrage et des moyens pour serrer ladite bande, la bande présentant un premier et un deuxième flanc entre lesquels est délimité un renfoncement interne apte à recevoir les surfaces de serrage, le système comprenant une pluralité de clips individuels de retenue répartis angulairement sur le premier flanc, chaque clip présentant une aile interne et une aile externe en regard, entre lesquelles le premier flanc est pincé, ainsi qu'une portion de retenue située radialement vers l'intérieur, l'une desdites ailes portant une première zone d'appui qui coopère avec une première surface d'appui du collier tournée vers l'axe de ce dernier, pour rappeler élastiquement le clip vers l'axe du collier de telle sorte que la portion de retenue soit apte à coopérer avec la surface de serrage du premier tube pour retenir le collier dans un état pré-monté sur ce tube en limitant le déplacement du collier par rapport au premier tube dans le sens allant vers l'extrémité libre dudit premier tube pourvue de la surface de serrage de ce premier tube.

Ainsi, selon le présent exposé, le pré-montage est réalisé grâce à des clips individuels qui sont pincés sur le premier flanc du collier pour être portés, chacun, par ce premier flanc, et qui présentent chacun une portion de retenue qui coopère avec la surface de serrage du premier tube pour réaliser le pré-montage. La mise en place de ces clips individuels sur le premier flanc est donc extrêmement simple et ne nécessite aucune opération de soudure. En particulier, ces clips sont élastiquement déformables, et leur mise en place est simplement opérée en disposant sur le premier flanc de telle sorte que le premier flanc soit inséré entre les ailes interne et externe des clips, qui se déforment élastiquement pour permettre cette insertion, de sorte que les clips agissent comme des pinces en pinçant le premier flanc. Une fois que les clips sont en place sur le premier flanc, l'extrémité du premier tube peut être insérée dans le système de serrage. A cette occasion, elle repousse les clips radialement vers l'extérieur, de sorte que les clips s'effacent en partie pour permettre le passage de la surface de serrage du premier tube. Cependant, grâce à sa première zone d'appui qui coopère avec la première surface d'appui du collier, un clip s'étant effacé revient élastiquement dans sa position de pré-montage, dans laquelle il est rappelé vers l'axe du collier, de sorte que la portion de retenue puisse coopérer avec la surface de serrage du premier tube pour le maintenir à l'état pré-monté. Plusieurs clips peuvent être répartis angulairement sur le premier flanc. En général, il suffira de prévoir deux, trois ou quatre clips. Les portions de retenue des différents clips ainsi disposés font saillie par rapport au bord interne du premier flanc, vers l'axe du collier. Ces portions de retenue définissent entre elles, en situation de repos des clips, des dimensions diamétrales qui sont inférieures aux dimensions diamétrales maximales de la surface de serrage du premier tube. Les portions de retenue s'écartent de l'axe du collier lorsque l'on insère l'extrémité du premier tube dans le collier, puis les clips reprennent une position dans laquelle leurs portions de retenue font suffisamment saillie vers l'axe par rapport au bord du premier flanc pour délimiter un diamètre de pré-montage, inférieur au diamètre maximal de la surface de serrage du premier tube.

En utilisant ainsi plusieurs clips individuels, on réduit la quantité de matériau par rapport à une situation dans laquelle une rondelle de pré-montage serait utilisée au lieu des clips. De plus, si, par ailleurs, le système de serrage comporte une rondelle, par exemple pour assurer une fonction d'étanchéité, la fonction d'étanchéité et la fonction de pré-montage peuvent être dissociées et des épaisseurs de matériaux différentes peuvent être utilisés pour la rondelle et pour les clips, ce qui permet en particulier d'utiliser des clips suffisamment résistants tout en ayant une rondelle très déformable pour assurer une fonction d'étanchéité. Enfin, on peut utiliser des clips individuels pour pré-monter le collier sur le premier tube, tout en utilisant une rondelle pour le pré-montage sur le deuxième tube. Cette rondelle peut par exemple assurer une double fonction de pré-montage sur le deuxième tube (éventuellement moins exigeant mécaniquement que le pré-montage sur le premier tube) et d'étanchéité du raccordement entre les tubes.

Optionnellement, la première surface d'appui du collier est formée sur le bord interne du premier flanc.

Ainsi, le collier du système de serrage peut être un collier standard, les clips prenant simplement appui sur son bord interne.

Optionnellement, pour au moins l'un des clips, la première zone d'appui est formée sur une languette d'appui découpée dans l'une des ailes interne et externe.

Cette découpe est une opération simple, qui peut se faire sans enlèvement de matière ou avec un enlèvement de matière partiel laissant subsister dans la découpe une languette, qui peut être pliée pour former la première zone d'appui.

Optionnellement, la languette d'appui est découpée dans l'aile externe et fait saillie dans l'espace interne du clip entre les ailes interne et externe, au moins par son extrémité libre.

Optionnellement, la languette d'appui est reliée à l'aile externe au voisinage de la jonction entre les ailes interne et externe.

Optionnellement, la languette d'appui est reliée à l'aile externe dans une zone de liaison distante de la jonction entre les ailes interne et externe, et présente une portion courante qui s'étend depuis ladite zone de liaison vers ladite jonction et une portion terminale repliée dans l'espace interne du clip, entre ses ailes interne et externe.

Optionnellement, la languette d'appui est découpée dans l'aile interne et fait saillie dans l'espace interne du clip entre les ailes interne et externe, au moins par son extrémité libre.

Optionnellement, l'extrémité libre de la languette d'appui est recourbée vers l'aile interne et est apte à coopérer avec la première surface d'appui du collier par une surface issue de la face de l'aile interne opposée à l'aile externe.

Ainsi, plusieurs modes de réalisation peuvent être prévus pour une languette d'appui tout en conservant au clip une géométrie très simple et nécessitant peu de matière.

Optionnellement, pour un clip présentant une première zone d'appui du type précité, coopérant avec une première surface d'appui du collier, l'aile interne présente une portion d'extrémité libre, recourbée vers l'intérieur et formant une deuxième zone d'appui apte, par sa surface externe, à coopérer avec le fond du renfoncement interne de la bande sur lequel est formée une deuxième surface d'appui du collier.

Dans ce cas, le clip présente deux zones d'appui. En particulier, lorsque les premières zones d'appui sont du type précité et que la première surface d'appui du collier est formée sur le bord interne du premier flanc, le collier peut être du type standard, la deuxième zone d'appui coopérant simplement avec le fond du renfoncement interne de la bande.

Cependant, l'aile interne à extrémité libre recourbée peut former la première zone d'appui. Ainsi, optionnellement, l'aile interne d'au moins l'un des clips présente une portion d'extrémité libre, recourbée vers l'intérieur et formant la première zone d'appui apte, par sa surface externe, à coopérer avec le fond du renfoncement interne de la bande sur lequel est formée la première surface d'appui du collier.

Dans ce cas, le clip peut ne pas présenter de languette d'appui du type précité, la première zone d'appui étant simplement formée par la portion d'extrémité libre, qui coopère avec le fond du renfoncement interne de la bande, le collier pouvant être standard.

Optionnellement, l'aile externe d'au moins l'un des clips présente une portion d'extrémité libre, recourbée vers l'intérieur et apte à coiffer la zone de jonction entre les premier et deuxième flancs de la bande.

Cette aile externe constitue alors un moyen supplémentaire pour solidariser le clip avec la bande du collier, qui vient en plus du pincement du premier flanc entre des ailes interne et externe tel qu'exposé précédemment.

Optionnellement, l'aile interne d'au moins l'un des clips présente, à distance de son raccordement avec l'aile externe, une portion de pincement ramenée vers l'aile externe.

Le pincement est alors réalisé entre l'aile externe et la portion de pincement venant de l'aile interne. Ainsi, les parties de l'aile interne autres que la portion de pincement peuvent être distantes de la surface interne du premier flanc, tout en permettant que le pincement soit effectif.

Optionnellement, la portion de pincement est formée par une languette de pincement, découpée dans l'aile interne et formant également la première zone d'appui qui coopère avec la surface interne du premier flanc sur laquelle est formée la première surface d'appui du collier, la languette de pincement étant en particulier tournée à l'opposé de l'axe du collier.

La languette de pincement sert donc à la fois à réaliser le pincement utile à maintenir le clip sur le premier flanc du collier, et à former la première zone d'appui qui, par réaction avec la première surface d'appui du collier, tend à rappeler élastiquement la portion de retenue vers l'axe du collier pour permettre le pré-montage du collier sur le premier tube.

Optionnellement, la portion de retenue d'au moins l'un des clips est formée à la jonction des ailes interne et externe.

La portion de retenue est mécaniquement résistante, en particulier grâce à l'écrouissage opéré par le pliage du clip à la jonction des ailes interne et externe. Cette portion de retenue peut présenter une surface sans bord franc, pouvant aisément glisser sur l'extrémité libre du premier tube lors de l'emmanchement du collier autour de ce premier tube, et pouvant coopérer avec la surface de serrage du premier tube sans la blesser.

Optionnellement, la portion de retenue d'au moins l'un des clips est formée par une languette de retenue portée par l'aile interne, en étant en particulier reliée à un bord latéral de ladite aile interne, et repliée vers l'axe du collier.

Dans ce cas, la portion de retenue est rendue mécaniquement résistante du fait du repliage vers l'axe du collier.

Optionnellement, le système de serrage comporte des moyens pour, à l'état pré-monté du collier sur le premier tube, limiter le déplacement du collier par rapport au premier tube dans le sens s'éloignant de l'extrémité libre dudit premier tube pourvue de la surface de serrage de ce premier tube.

De tels moyens peuvent être réalisés de différentes manières.

Par exemple, le système de serrage comporte un organe de limitation du déplacement porté par le deuxième flanc. Cet organe de limitation du déplacement peut d'ailleurs en outre servir au pré-montage du collier sur le deuxième tube. Cet organe peut en particulier être une rondelle. Pour ce qui est du pré-montage sur le premier tube, les clips individuels peuvent être dimensionnés de manière à offrir la résistance mécanique souhaitée. Pour ce qui est du pré-montage sur le deuxième tube, la rondelle peut servir à assurer également une autre fonction, telle qu'une fonction d'étanchéité. Dans ce cas, le pré-montage par rapport au deuxième tube pourra éventuellement être moins résistant à l'arrachement que le pré-montage par rapport au premier tube. Par exemple, le système de serrage peut être pré-monté à l'avance sur le premier tube pour être embarqué avec ce dernier, ce qui peut nécessiter qu'il soit fortement résistant à l'arrachement, tandis que le pré-montage sur le deuxième tube pourra être simplement utile au moment de l'assemblage, auquel cas on pourra se satisfaire d'un pré-montage moins résistant à l'arrachement.

Selon un autre exemple, l'aile interne d'au moins l'un des clips présente un rebord transversal en saillie vers l'axe du collier.

Dans ce cas, la limitation de déplacement du collier par rapport au premier tube dans le sens s'éloignant de l'extrémité libre du premier tube peut ainsi être réalisée, même si le système de serrage n'est pas pourvu de rondelle ou d'organe spécifique de limitation du déplacement coopérant avec le deuxième flanc du collier.

Optionnellement, l'aile interne d'au moins l'un des clips présente un ergot d'agrippement en saillie dans l'espace interne du clip entre les ailes interne et externe.

On a indiqué plus haut que l'on peut réaliser un pré-montage sur le deuxième tube à l'aide d'une rondelle, par exemple une rondelle ayant également une fonction d'étanchéité. Il est également possible d'assurer le pré-montage sur le deuxième tube en utilisant des clips individuels analogues à ceux qui sont décrits dans le présent exposé, placés sur le deuxième flanc du collier.

Le présent exposé sera bien compris à la lecture de la description détaillée qui suit, d'exemples de réalisation représentés à titre d'illustration non limitative. L'exposé se rapporte aux dessins annexés sur lesquels :
- la figure 1 est une vue en perspective montrant le système de serrage et les extrémités de deux tubes avant l'assemblage de ce système sur ces extrémités, le système de serrage étant vu depuis un premier côté ;
- la figure 2 est une vue en perspective du système de serrage prise à partir d'un deuxième côté, selon la flèche II de la figure 1 ;
- la figure 3 est une vue en perspective éclatée montrant les différents éléments constitutifs du système de serrage avant leur assemblage, ainsi que les extrémités des deux tubes ;
- la figure 4 est une vue en coupe dans le plan IV-IV de la figure 2 ;
- la figure 5A est une vue en coupe dans le plan V-V de la figure 2 ;
- les figures 5B et 5C montrent, respectivement en vue de côté et en perspective, le clip représenté sur la coupe de la figure 5A ;
- la figure 5D montre, en perspective, une variante de réalisation de ce clip ;
- la figure 6A est une vue correspondant à la figure 5A, pour une autre forme de réalisation du clip ;
- les figures 6B et 6C montrent, respectivement en vue de côté et en perspective, le clip de la figure 6A ;
- la figure 7A est une vue correspondant à la figure 5A, pour encore une autre forme de réalisation du clip ;
- les figures 7B et 7C montrent, respectivement en vue de côté et en perspective le clip de la figure 7A ;
- la figure 8A est une vue correspondant à la figure 5A pour encore une autre forme de réalisation du clip ;
- les figures 8B et 8C montrent, respectivement en vue de côté et en perspective, le clip de la figure 8A ;
- la figure 9A est une vue correspondant à la figure 5A pour encore une autre forme de réalisation du clip ;
- les figures 9B et 9C montrent, respectivement en vue de côté et en perspective le clip de la figure 9A ;
- la figure 10 montre, en perspective, le système de serrage selon une autre forme de réalisation, disposé sur les extrémités assemblées des tubes, vu à partir d'un premier côté ;
- la figure 11 est une vue en perspective prise selon la flèche XI de la figure 10 ;
- la figure 12 montre, en perspective prise du même côté que la figure 10, le système de serrage des figures 10 et 11 ;
- la figure 13 est une vue en coupe dans le plan XIII-XIII de la figure 12 ; et
- les figures 14A et 14B sont deux vues en perspective du clip de la figure 13.

Le collier du système de serrage selon le présent exposé est par exemple globalement analogue à celui que décrivent les documents EP 1 451 498 et EP 2 598 785.

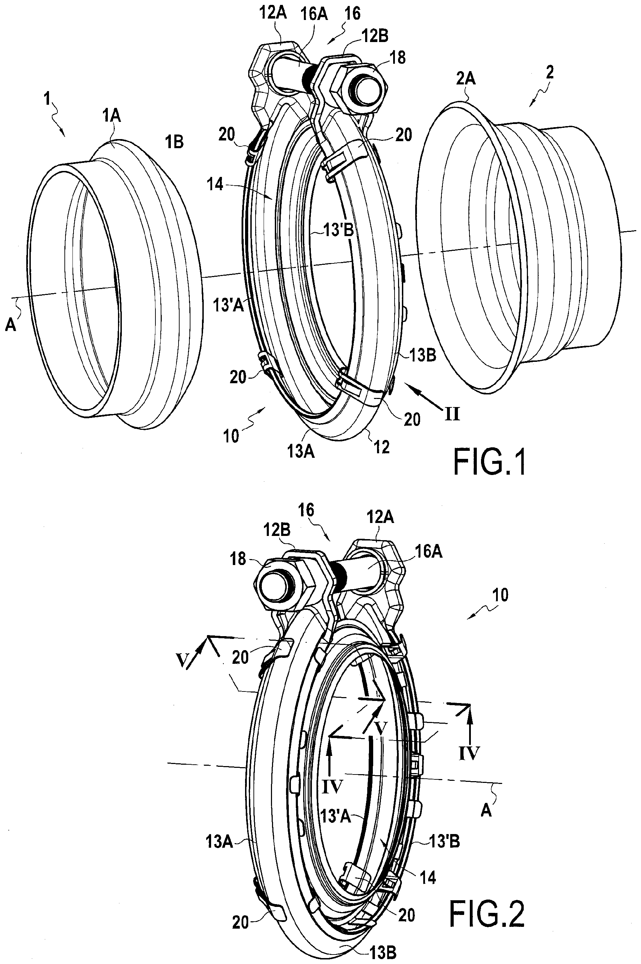

Ainsi, comme on le voit en particulier sur les figures 1 à 3, ce collier 10 comporte une bande 12 qui présente un premier flanc 13A et un deuxième flanc 13B entre lesquels est délimité un renfoncement interne 14.

Dans toute la suite, sauf indications contraires, on qualifiera de "internes" les éléments qui sont dirigés vers l'axe A du collier ou qui sont les plus proches de cet axe A par rapport à d'autres éléments qualifiés de "externes", les éléments "externes" sont également ceux qui sont dirigés à l'opposé de l'axe A.

Le système de serrage sert à raccorder deux tubes par leurs extrémités. Ainsi, la figure 1 montre un premier tube 1 et un deuxième tube 2, qui présentent respectivement une première surface de serrage 1A et une deuxième surface de serrage 2A en saillie par rapport à leurs surfaces extérieures cylindriques respectives. Pour l'assemblage des tubes 1 et 2, le système de serrage peut être disposé autour des extrémités assemblées des tubes, de sorte que les surfaces de serrage 1A et 1B se trouvent dans le renfoncement 14 de la bande 12. Dans cette situation, les flancs 13A et 13B coopèrent respectivement avec les surfaces de serrage 1A et 2A, de sorte que le serrage du collier maintient les deux extrémités.

En l'espèce, la bande 12 présente en section une forme en V, c'est-à-dire que les flancs 13A et 13B sont orientés vers l'axe A, tout en ayant tendance à s'écarter progressivement l'un de l'autre à mesure que l'on progresse vers leurs bords internes respectifs 13'A et 13'B. De leur côté, les surfaces de serrage 1A et 2A ont un diamètre qui augmente graduellement vers les extrémités libres en regard des tubes, en étant par exemple de forme tronconique. Ainsi, le serrage du collier sur les surfaces de serrage des extrémités des tubes à assembler tend à rapprocher ces extrémités l'une de l'autre. En l'espèce, l'extrémité libre du premier tube 1 présente une jupe terminale 1B qui, à partir du sommet de la surface de serrage 1A, tend à se rapprocher progressivement de l'axe du tube. En particulier, cette jupe terminale 1B peut présenter une forme tronconique adaptée à la périphérie interne de la surface de serrage 2A du deuxième tube. Pour l'assemblage, les axes des tubes 1 et 2 sont évidemment alignés et coaxiaux avec l'axe A du collier.

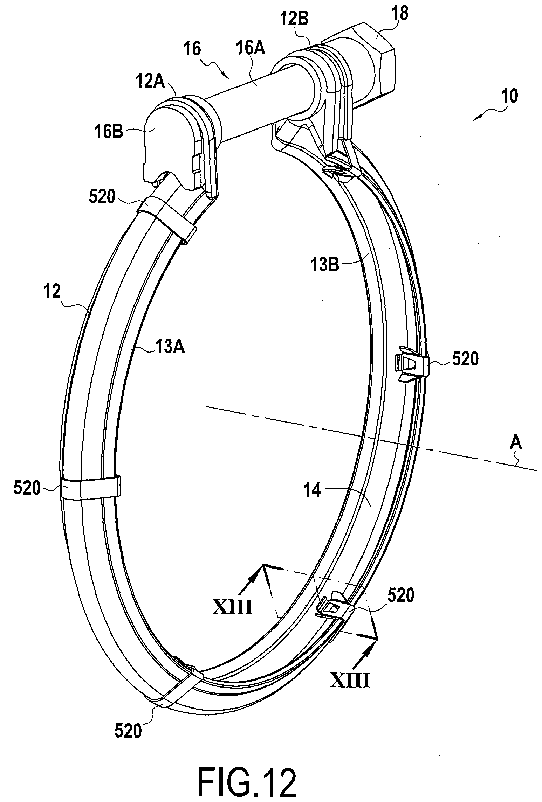

Le collier 10 comporte des moyens pour serrer la bande 12. En l'espèce, cette bande 12 présente des extrémités, respectivement 12A et 12B, qui sont redressées sensiblement radialement de manière à former des pattes d'appui. Ces pattes sont percées de manière à permettre le passage de la tige 16A d'une vis 16 à travers ces pattes. De manière connue en soi, la tête 16B de la vis (voir figure 12) peut être retenue par rapport à la patte 12A, tandis qu'un écrou 18 coopère avec la patte 12B, de sorte que la rotation relative de la vis et de l'écrou dans le sens du vissage rapproche les pattes d'appui 12A et 12B l'une de l'autre et réduit donc le diamètre intérieur du collier, ce qui permet de serrer la bande.

Le système de serrage comprend également une pluralité de clips individuels 20 qui sont répartis angulairement sur le premier flanc 13A. Comme on le verra mieux dans la suite, chaque clip est retenu sur le flanc 13A à la manière d'une pince, c'est-à-dire que ce flanc est pincé entre les ailes interne et externe du clip.

En l'espèce, le système de serrage comprend également une rondelle 22, qui est portée par le deuxième flanc 13B. Par exemple, cette rondelle est analogue à la rondelle 28, 128 du système de serrage que décrit le document EP 1 451 498.

Comme on l'expliquera dans la suite, les clips individuels 20 permettent de retenir le système de serrage à l'état pré-monté sur le premier tube, en coopérant avec la surface de serrage 1A de ce premier tube, tandis que la rondelle permet de retenir ce système à l'état pré-monté sur le deuxième tube, la rondelle coopérant avec la surface de serrage 2A, alors que les extrémités des tubes sont rapprochées l'une de l'autre, de sorte que les deux surfaces d'appui 1A et 2A se trouvent dans le renfoncement 14 de la bande 12.

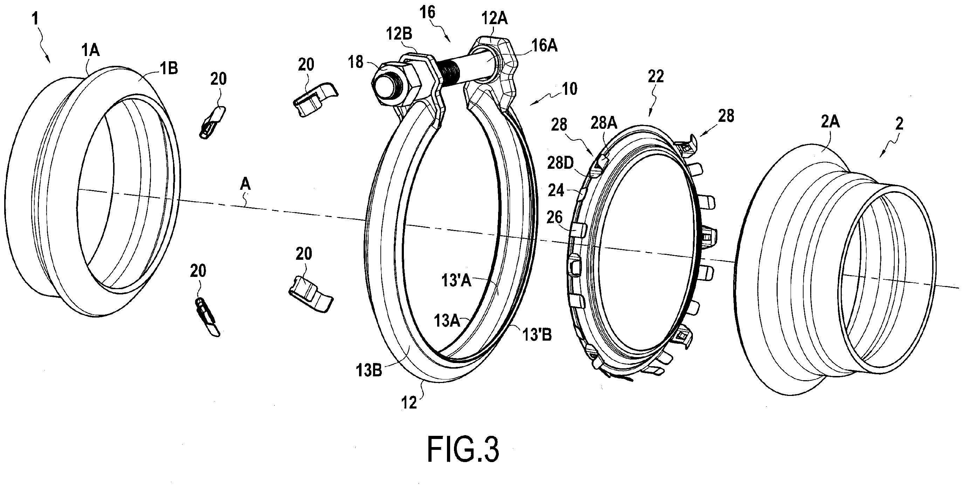

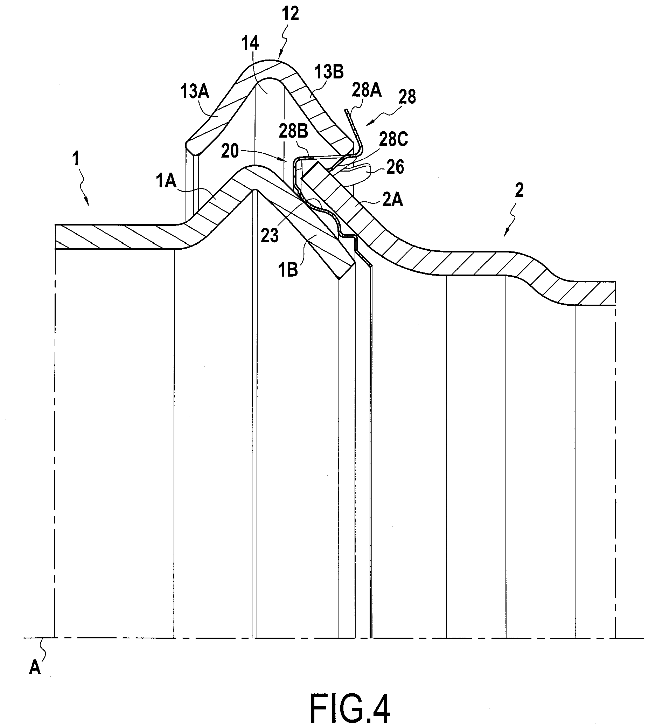

En référence en particulier aux figures 3 et 4, on voit que la rondelle 22 présente un anneau 23 sensiblement tronconique qui, à l'état assemblé des deux tubes, est disposé entre la périphérie interne de la surface de serrage 2A du tube 2 et la périphérie externe de la jupe 1B du tube 1. Cet anneau peut présenter des ondulations qui, lors du serrage, sont déformées, pour assurer l'étanchéité entre les surfaces des tubes avec lesquels elles coopèrent.

La rondelle 22 est retenue par rapport au collier 10 par coopération avec le flanc 13B de la bande 12. A cet effet, la rondelle présente des pattes de fixation qui, en l'espèce, sont de différents types. Il s'agit en particulier de pattes internes 24 qui, à l'état non serré du collier, viennent en appui contre la surface interne du flanc 13B, de pattes externes 26 d'un premier type, qui sont plus longues que les pattes internes 32 et sont orientées sensiblement parallèlement à l'axe A de manière à coopérer avec le bord interne 13'B du flanc 13B, et de pattes externes d'un deuxième type 28 qui coopèrent avec la périphérie externe du flanc 13B par leurs extrémités libres 28A conformées en crochet. Les parties médianes 28B de ces pattes présentent des languettes 28C qui, comme on le voit sur la figure 4, viennent s'agripper sur la surface de serrage 2A, ainsi que des bords axiaux inclinés 28D qui viennent également s'agripper sur la surface de serrage 2A lorsque l'extrémité libre du tube 2 est insérée dans le renfoncement 14 de la bande du collier, sur l'anneau 23 de la rondelle 22.

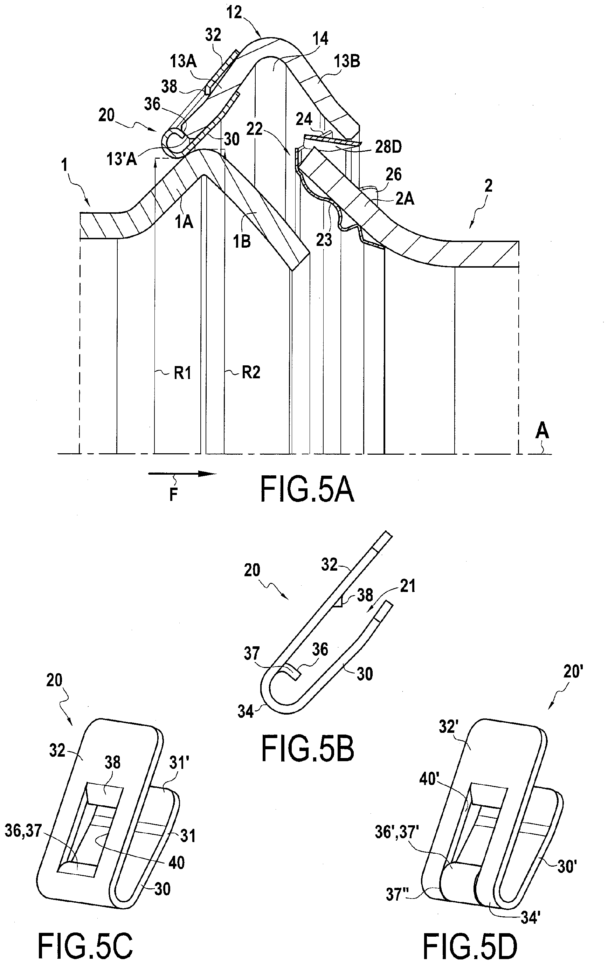

En référence en particulier aux figures 3, 5A, 5B et 5C, on décrit maintenant les clips individuels. Pour la clarté de la figure 5A, l'espace entre les extrémités des tubes sur lesquelles le système de serrage est pré-monté, est exagéré. Chacun de ces clips 20 présente une aile interne 30 et une aile externe 32 en regard l'une de l'autre. En particulier, ces ailes sont axialement en regard. Comme on le voit sur la figure 5A, le flanc 13A de la bande 12 du collier est pincé entre ces ailes interne et externe. Le clip 20 présente une portion de retenue 34 située radialement vers l'intérieur, et l'aile externe 32 présente une première zone d'appui 36 qui, comme on le voit sur la figure 5A, coopère avec une première surface d'appui du collier formée en l'espèce par le bord interne 13'A du flanc 13A. En l'espèce, lorsque le clip 20 est pincé sur le premier flanc 13A, le bord interne 13'A vient en appui sur la zone d'appui 36, ce qui tend à rappeler la portion de retenue 34 vers l'axe du collier. Ceci permet d'assurer que la portion de retenue 34 se trouve à la distance souhaitée par rapport au bord interne 13'A du flanc 13A, c'est-à-dire que, considérées ensemble, les portions de retenue 34 des différents clips 20 répartis angulairement sur le premier flanc définissent les dimensions radiales souhaitées, légèrement inférieures au rayon R2 du sommet de la surface d'appui 1A. Cependant, le rappel de la portion de retenue 34 vers l'axe A du collier est élastique. Ainsi, lorsque le système de serrage est mis en place sur le premier tube, l'extrémité libre de ce dernier peut être insérée dans le renfoncement interne 14 de la bande, le sommet de la surface de serrage 1A coopérant alors avec les portions de retenue 34 pour repousser élastiquement radialement les clips 20 vers l'extérieur puis, une fois que le sommet de la surface d'appui se trouve dans le renfoncement 14, les clips reprennent élastiquement leurs positions de retenue de pré-montage dans laquelle, comme représenté sur la figure 5A, les portions de retenue 34 des différents clips définissent des dimensions radiales R1 inférieures au rayon R2. Le collier 10 est ainsi retenu à l'état pré-monté sur le premier tube, c'est-à-dire que le déplacement du collier par rapport au premier tube dans le sens F allant vers l'extrémité libre du premier tube est limité par la coopération des portions de retenue avec la première surface de serrage 1.

En l'espèce, la portion de retenue 34 est formée à la jonction entre les ailes interne et externe.

La zone d'appui 36 est formée sur une languette d'appui 37 qui est découpée dans l'aile externe 32 et qui fait saillie dans l'espace interne 21 du clip défini entre ses ailes interne et externe 30 et 32. En l'espèce, la languette d'appui 37 est reliée à l'aile externe 32 au voisinage de la jonction entre les ailes interne et externe.

On voit également que l'aile externe 32 du clip 20 présente un ergot d'agrippement 38 qui est en saillie dans l'espace interne 21 du clip. Comme on le voit sur la figure 5A, cet ergot coopère avec la surface externe du flanc 13A de la bande 12 pour s'agripper sur cette dernière en ayant tendance à s'opposer au déplacement du clip par rapport au flanc 13A vers l'axe A du collier. Cet ergot 38 est situé à distance de la jonction entre les ailes interne et externe, par exemple au voisinage de l'extrémité libre de l'aile externe, de manière à être positionné en contact avec la surface externe du flanc 13A lorsque le clip est pincé sur ce flanc. En l'espèce, l'ergot 38 est formé par une découpe de l'aile externe 32 repliée vers l'intérieur et vers l'axe A.

D'ailleurs, on voit en l'espèce que la languette 37 et l'ergot 38 sont situés aux deux bords opposés d'une fenêtre 40 découpée dans l'aile externe 32. Ainsi, l'aile externe présente deux portions marginales pleines de part et d'autre de cette fenêtre 40. On pourrait prévoir une disposition inverse, avec une portion centrale pleine, sur au moins un des bords de laquelle serait ménagée une encoche dont le bord interne serait replié pour former la languette 37 et le bord externe serait replié pour former l'ergot 38. On pourrait également prévoir que le clip présente une fenêtre du type de la fenêtre 40 et une ou plusieurs encoches latérales, avec une languette 37 située soit sur le bord interne de la fenêtre, soit sur le bord interne d'une encoche, et un ergot d'agrippement 38 situé soit sur le bord externe de la fenêtre, soit sur le bord externe de l'encoche.

La figure 5B montre un clip 20' qui est une variante du clip 20, analogue en tout point à ce clip, à ceci près que la languette 37', dont la surface externe forme la zone d'appui 36', présente des bords longitudinaux 37" plus longs, le bord interne de la fenêtre 40' étant situé dans la zone de jonction entre les ailes interne et externe 30' et 32', voire même jusque dans l'aile interne 30'. Cependant, l'extrémité de la languette 37' dont la surface externe forme la zone d'appui 36', fait saillie dans l'espace interne du clip à partir de son aile externe 32'. La portion de retenue 34' du clip 20' est également située à la jonction entre ses ailes interne et externe.

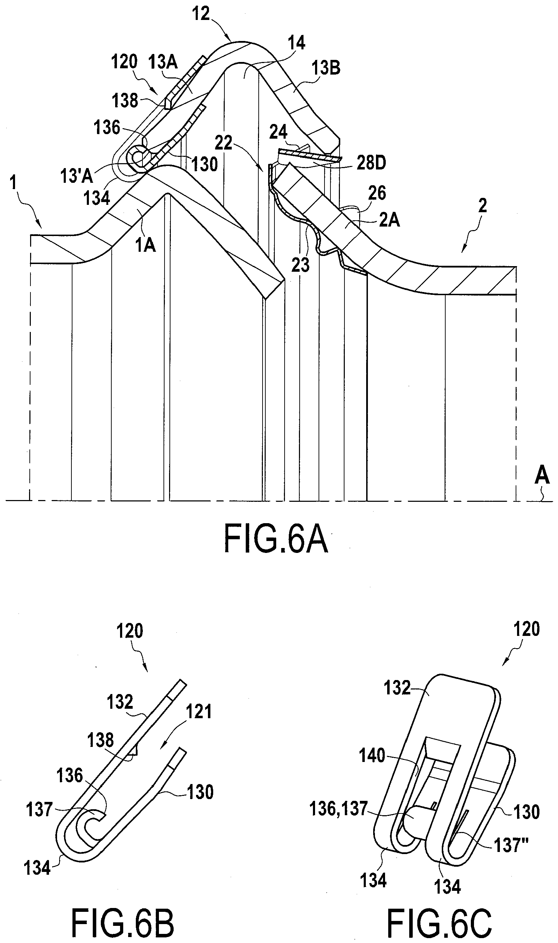

On décrit maintenant les figures 6A à 6C, sur lesquelles le clip est légèrement différent de ceux des figures précédentes. Sur les figures 6A à 6B, ce clip est désigné par la référence 120, les autres éléments étant désignés par la même référence que sur les figures précédentes plus 100. Le clip 120 présente une aile interne 130 et une aile externe 132. Sa portion de retenue 134 est formée à la jonction des ailes interne et externe, c'est-à-dire, comme pour les clips des figures précédentes, dans la zone de pliage entre les ailes interne et externe.

La zone d'appui 136 est également formée par la surface externe d'une languette 137 qui est repliée dans l'espace interne 121 du clip. Cette fois, cette languette 137 est repliée à partir de l'aile interne 130 à laquelle elle est raccordée, à proximité de la jonction entre les ailes interne et externe. En l'espèce, c'est seulement la partie d'extrémité libre recourbée de la languette 137 qui fait saillie dans l'espace interne 121, le reste de la languette étant sensiblement dans le plan de l'aile interne 130.
Le clip présente une fenêtre 140 qui s'étend, à partir d'une région de l'aile externe voisine de son extrémité libre, jusque dans l'aile interne. A partir de son rattachement à l'aile interne 130, la languette 137 s'étend sensiblement dans le plan de cette aile interne en allant vers la portion de retenue 134, puis est recourbée pour être repliée dans l'espace interne 121 du clip, en retrait par rapport à la jonction entre les ailes interne et externe. A proximité du rattachement de la languette 137 avec l'aile interne, les bords 137" de cette languette sont découpés dans l'aile interne sur une longueur par exemple de l'ordre de 1/3 de la longueur de l'aile interne, de manière à conférer à cette languette une élasticité relativement importante. Le clip 120 présente également un ergot d'agrippement 138 qui est en l'espèce formé au bord de la fenêtre 140 voisin de l'extrémité libre de l'aile externe 132. Comme indiqué en référence aux figures 5B et 5C, on pourrait inverser la disposition, en faisant en sorte que la languette 137, et éventuellement, l'ergot 138, soient formés dans des encoches latérales des ailes.

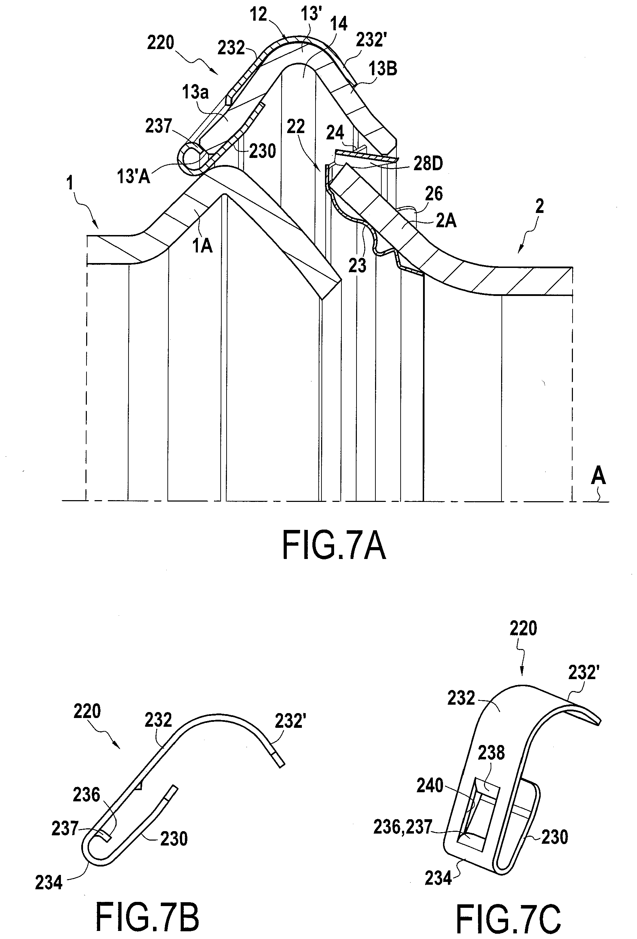

On décrit maintenant les figures 7A à 7C qui se distinguent également des figures 5A à 5C seulement par la conformation du clip 220. Ce clip 220 est en l'espèce identique au clip 20 précédemment décrit, sauf en ce qui concerne la conformation de l'extrémité libre de son aile externe 232. On reconnaît en particulier les ailes interne et externe 230, 232, la languette 237 dont la surface externe 236 forme la zone d'appui, la fenêtre 240 analogue à la fenêtre 40, l'ergot d'agrippement 238 et la portion de retenue 234. Cependant, l'aile externe 232 est prolongée par rapport à celle du clip 20. En effet, cette aile externe présente une portion d'extrémité libre 232' qui est recourbée vers l'intérieur de manière à coiffer la zone de jonction 13' entre les flancs 13A et 13B de la bande 12 du collier. La coiffe ainsi formée contribue à retenir le clip pincé sur le flanc 13A en s'opposant à son déplacement vers l'axe A du collier. Bien entendu, un tel prolongement recourbé de l'aile externe pourrait également être utilisé sur les clips des figures 5A à 5D et 6A à 6C.

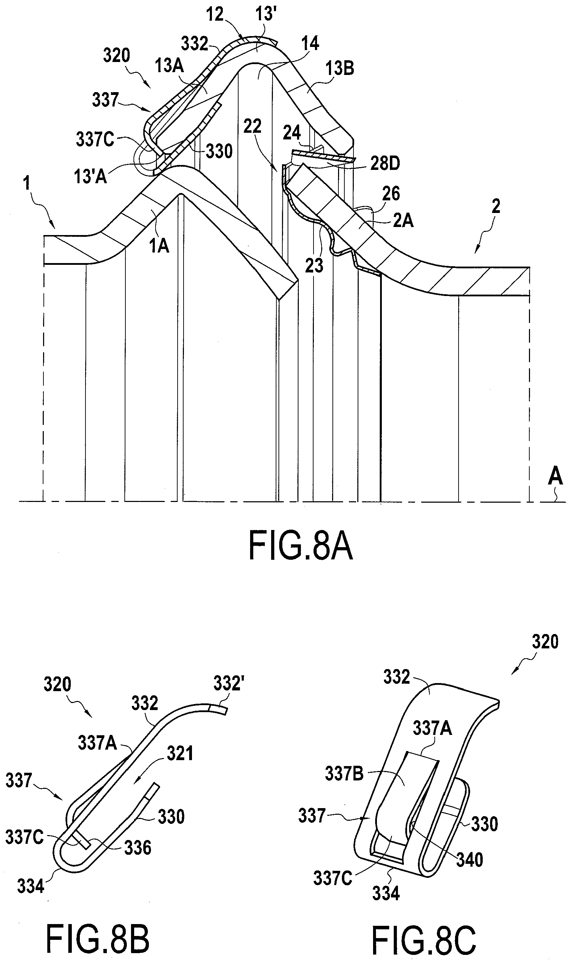

On décrit maintenant les figures 8A à 8C, qui se distinguent également des figures 5A à 5C par la conformation du clip 320. Ce clip présente des ailes interne 330 et externe 332 entre lesquelles est pincé le flanc 13A de la bande du collier, une portion de retenue 334 à la jonction de ses ailes, et une zone d'appui 336 formée sur une languette 337 qui fait saillie dans l'espace interne 321 du clip. Cependant, en l'espèce, la languette d'appui 337 est reliée à l'aile externe 332 dans une zone de liaison 337A qui est distante de la jonction entre les ailes interne et externe. Cette languette présente une portion courante 337B qui s'étend depuis la zone de liaison 337A vers la jonction 334, et une portion terminale 337C qui est repliée dans l'espace interne 321 du clip. En l'espèce, la portion courante 337B de la languette est légèrement relevée par rapport à l'aile externe 332 dont elle provient, ce qui lui confère une élasticité accrue. De même que précédemment, la surface d'appui du flanc 13A du collier qui vient en appui contre la zone d'appui 336 est formée par le bord interne 13'A du flanc 13A. En l'espèce, l'aile externe 332 du clip présente une extrémité libre 332' recourbée pour coiffer la zone de jonction 13' entre les flancs 13A et 13B de la bande du collier. En l'espèce, ce clip est dépourvu d'ergot d'agrippement du type des ergots 38, 138 et 238 précédemment décrits, mais il pourrait comporter de tels ergots, par exemple formés sur les portions marginales de la face externe du clip, de part et d'autre de la fenêtre 340 dans laquelle est découpée la languette 337.

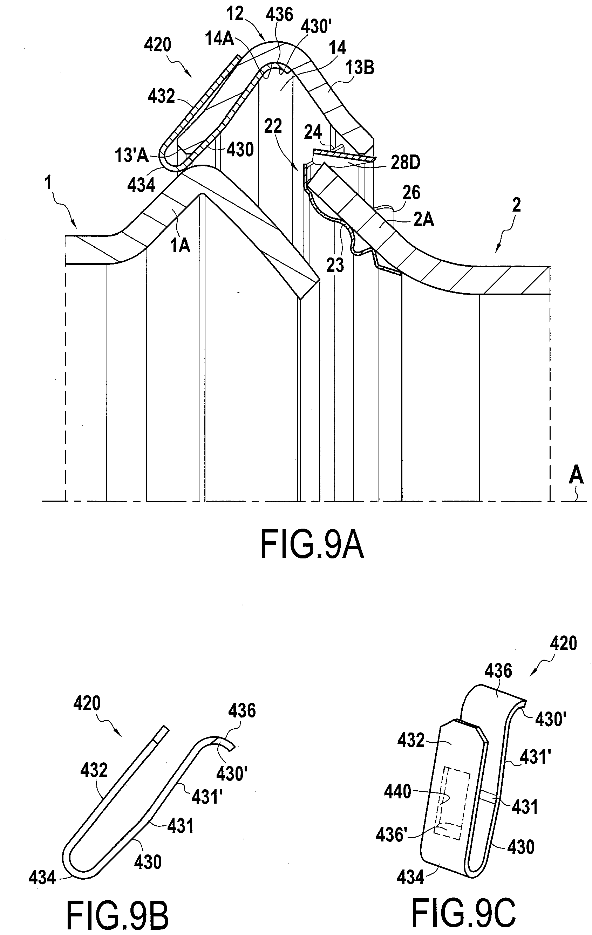

On décrit maintenant les figures 9A à 9C, qui se distinguent également des figures 5A à 5C par la conformation du clip. Ce clip 420 présente une aile interne 430 et une aile externe 432 entre lesquelles est pincé le flanc 13A de la bande. Cependant, la zone d'appui est formée différemment par rapports aux clips décrits précédemment. En effet, cette zone d'appui 436 est formée à l'extrémité libre de l'aile interne 430. Plus précisément, cette aile interne présente une portion d'extrémité libre 430' qui s'étend jusqu'au fond 14A du renfoncement 14 ménagé entre les flancs 13A et 13B de la bande du collier, et vient donc s'appuyer contre ce fond. La portion d'extrémité libre 430' de l'aile interne est recourbée vers l'intérieur, la zone d'appui 436 étant formée par la surface externe de cette portion d'extrémité libre recourbée 430', en contact avec le fond du renfoncement 14A. En l'espèce, l'aile externe 432 est une portion de bande pleine. Il doit toutefois être entendu que ce clip pourrait comporter, en plus de la zone d'appui 436 qui vient d'être décrite, une zone d'appui de type des zones d'appui 36, 136, 236 et 336 précédemment décrites.

Pour illustrer cela, on a indiqué en traits interrompus sur la figure 9C, la possibilité pour l'aile externe 432 du clip 420 avoir une fenêtre 440 analogue à la fenêtre 40, et une languette 436' analogue à la languette 36.

La portion de retenue 434 est, comme pour les clips précédemment décrits, située à la jonction entre les ailes interne et externe.

Dans les différentes configurations qui viennent d'être décrites, l'aile interne du clip présente, à distance de son raccordement avec l'aile externe, une portion de pincement ramenée vers l'aile externe. Par exemple, l'aile interne 30 du clip 20 présente une zone de pliage 31, la portion d'extrémité 31' de cette aile interne qui s'étend au-delà de cette zone de pliage étant ramenée vers l'intérieur. La même conformation est visible sur les clips des autres figures, à ceci près que, pour celui des figures 9A à 9C, cette portion de pincement 431' ramenée vers l'aile externe s'étend entre la zone de pliage 431 et la portion d'extrémité libre 430' recourbée vers l'intérieur.

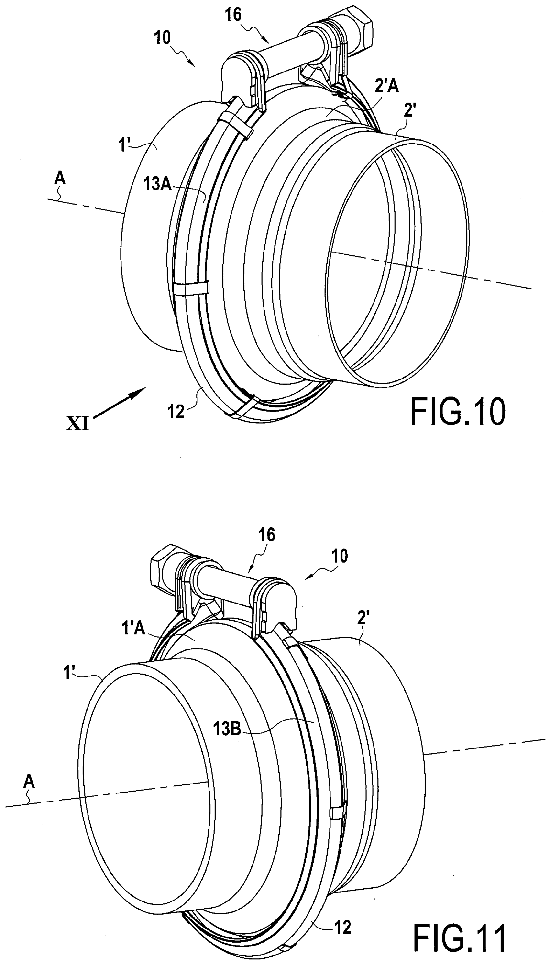

On pourrait également prévoir que cette portion de pincement soit formée par une languette de pincement, découpée dans l'aile interne et formant également la zone d'appui qui coopère avec la surface d'appui du collier. C'est notamment ce que montrent les figures 10 à 14B, que l'on décrit maintenant. Sur ces figures, les tubes sont inversés par rapport aux figures précédentes, le premier tube 1' qui coopère par sa surface de serrage 1'A avec les clips 520 étant analogue au tube 2 des figures précédentes, tandis que le tube 2', avec sa surface de serrage 2'A et sa jupe 2'B, est analogue au tube 1 des figures précédentes.

On décrit tout d'abord les figures 10 à 12. Le collier représenté sur ces figures est en lui-même analogue à celui des figures précédentes, et il est donc désigné par les mêmes références. En l'espèce, le système de serrage représenté sur ces figures est dépourvu de la rondelle 22 de figures précédentes. Il doit être toutefois être entendu qu'une telle rondelle pourrait être prévue car elle est compatible avec ce mode de réalisation.

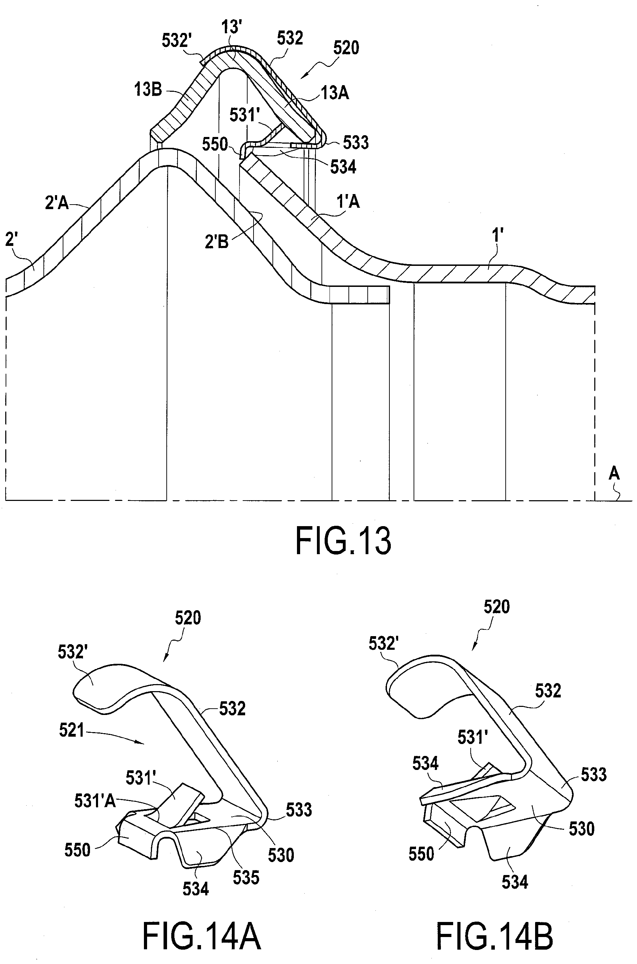

Les figures 10 et 11 montrent le système de serrage pré-monté sur les extrémités des deux tubes assemblées. La figure 12 montre le système de serrage seul, c'est-à-dire le collier équipé des clips individuels 520. En s'intéressant plus particulièrement aux figures 13, 14A et 14B, on voit que ce clip 520 présente une aile interne 530 et une aile externe 532, et que le flanc 13A de la bande 12 du collier est pincé entre ces ailes interne et externe. Cependant, pour réaliser le pincement, l'aile externe 532 s'étend contre la surface externe du flanc 13A, et du côté de l'aile interne, le clip présente une portion de pincement 531' qui est formée par une languette de pincement, découpée dans l'aile interne 530 et relevée par rapport à elle dans l'espace interne 521 du clip entre ses ailes interne et externe. On voit sur la figure 13 que, lorsque le clip est assemblé sur le flanc 13A, l'extrémité libre de la languette de pincement 531' repose contre la surface interne du flanc 13A. Ce flanc est ainsi pincé entre cette extrémité libre et l'aile externe. Cette languette de pincement 531' forme également une zone d'appui qui coopère avec la surface interne du premier flanc 13A en ayant tendance à rappeler élastiquement la portion de retenue 534 du clip vers l'axe A du collier. En particulier, la languette 531' est relevée dans l'espace interne 521 du clip à partir de sa liaison 531'A avec l'aile interne, située à distance de la zone de jonction 533 entre les ailes interne et externe.

En l'espèce, la portion de retenue 534 du clip est formée par deux languettes de retenue 534 qui sont portées par l'aile interne 530 en étant en particulier reliées à un bord latéral 535 de cette aile interne, et qui sont repliées vers l'axe du collier. Comme on le voit sur la figure 13, les bords libres des ailes 534 reposent ainsi sur la surface de serrage 1'A du tube 1 lorsque cette dernière est insérée dans le renfoncement 14 de la bande 12, pour retenir le collier à l'état pré-monté par rapport à cette surface de serrage 1'A. Pour limiter l'avancement de l'extrémité libre du tube 1' dans le renfoncement interne, dans cet état pré-monté, le clip 520 présente un rebord transversal 550 qui est en saillie vers l'axe du collier. On voit en effet sur la figure 13 que, à l'état pré-monté, le bord libre de la surface de serrage 1'A vient en appui contre la face arrière du rebord transversal 550.

On remarque encore que l'extrémité libre 532' de l'aile externe 532 du clip 520 s'étend jusqu'à coiffer la zone de jonction 13' des flancs 13A et 13B, en étant recourbée vers l'intérieur. Ceci contribue donc à s'opposer à un déplacement excessif du clip par rapport au flanc 13A dans le sens allant en se rapprochant de l'axe A.

Comme dans les modes de réalisation précédents, lorsque le collier est engagé sur la surface de serrage 1'A, cette dernière coopère avec la portion de retenue 534 pour déformer élastiquement le clip, et celui-ci est rappelé élastiquement vers l'axe A du collier pour que sa portion de retenue délimite un rayon inférieur au rayon maximal de la surface de serrage du premier tube, de manière à retenir le collier pré-monté sur ladite surface. Dans le cas du clip des figures 10 à 14B, c'est l'aile interne 530 dans son ensemble qui fléchit élastiquement, en étant rappelée vers l'axe A par la languette de pincement 531' qui forme également la première zone d'appui.

Comme on l'a indiqué, le système de serrage des figures 10 à 14B est dépourvu de la rondelle 22 des figures précédentes. De manière générale, son flanc 13B est dépourvu de rondelle ou de clip qui serviraient à retenir le tube 1 à l'état pré-monté dans le renfoncement interne 14. Il est bien entendu que l'on pourrait cependant équiper ce flanc 13B d'une rondelle analogue à la rondelle 22, ou bien de clips, en particulier analogues à ceux qui ont été décrits en référence aux figures 1 à 9C. Lors du serrage, les deux tubes sont rapprochés l'un de l'autre, et l'aile interne 530 du clip 520 se replie contre la surface interne du flanc 13A par déformation plastique, le bord replié 550 ne s'opposant donc plus à l'avancement du premier tube 1' vers le deuxième tube 2'.

Dans le cas des figures 1 à 9C, la rondelle 22 sert non seulement à réaliser un pré-montage par rapport au deuxième tube, mais également à limiter le déplacement du collier par rapport au premier tube 1 dans le sens s'éloignant de l'extrémité libre de ce premier tube.

Les clips décrits dans le présent exposé sont en particulier formés en métal, à partir d'une simple bande de métal pliée et, éventuellement, découpée. De même, le collier et, lorsqu'elle est présente, la rondelle, peuvent être en métal.

## Revendications

1. Système de serrage pour le raccordement étanche de deux tubes (1, 2 ; 1', 2') dont les extrémités en regard présentent des surfaces de serrage (1A, 2A ; 1'A, 2'A) faisant saillie par rapport à la surface extérieure cylindrique desdits tubes, le système comprenant un collier (10) ayant une bande (12) apte à coopérer avec lesdites surfaces de serrage et des moyens (12A, 12B, 16, 18) pour serrer ladite bande, la bande présentant un premier et un deuxième flanc (13A, 13B) entre lesquels est délimité un renfoncement interne (14) apte à recevoir les surfaces de serrage,
**caractérisé en ce qu'**il comprend une pluralité de clips individuels de retenue (20 ; 20' ; 120 ; 220 ; 320 ; 420 ; 520) répartis angulairement sur le premier flanc (13A), chaque clip présentant une aile interne (30 ; 30' ; 130 ; 230 ; 330 ; 430 ; 530) et une aile externe (32 ; 32' ; 132 ; 232 ; 332 ; 432 ; 532) en regard, entre lesquelles le premier flanc est pincé, ainsi qu'une portion de retenue (34 ; 34' ; 134 ; 234 ; 334 ; 434 ; 534) située radialement vers l'intérieur, l'une desdites ailes portant une première zone d'appui (36 ; 36' ; 136 ; 236 ; 336 ; 436 ; 436' ; 531') qui coopère avec une première surface d'appui (13'A ; 14'A) du collier tournée vers l'axe de ce dernier, pour rappeler élastiquement le clip vers l'axe (A) du collier de telle sorte que la portion de retenue soit apte à coopérer avec la surface de serrage (1A ; 1'A) du premier tube (1 ; 1') pour retenir le collier dans un état pré-monté sur ce tube en limitant le déplacement du collier par rapport au premier tube dans le sens allant vers l'extrémité libre dudit premier tube pourvue de la surface de serrage de ce premier tube.

2. Système de serrage selon la revendication 1, **caractérisé en ce que** la première surface d'appui du collier (10) est formée sur le bord interne (13'A) du premier flanc (13A).

3. Système de serrage selon la revendication 1 ou 2, **caractérisé en ce que**, pour au moins l'un des clips (20 ; 20' ; 120 ; 220 ; 320 ; 420), la première zone d'appui (36 ; 36' ; 136 ; 236 ; 336 ; 436' ; 531') est formée sur une languette d'appui (37 ; 37' ; 137 ; 237 ; 337) découpée dans l'une des ailes interne et externe.

4. Système de serrage selon la revendication 3, **caractérisé en ce que** la languette d'appui (37 ; 37' ; 137 ; 237 ; 337) est découpée dans l'aile externe et fait saillie dans l'espace interne du clip entre les ailes interne et externe, au moins par son extrémité libre.

5. Système de serrage selon la revendication 4, **caractérisé en ce que** la languette d'appui (37 ; 37' ; 237) est reliée à l'aile externe au voisinage de la jonction entre les ailes interne et externe.

6. Système de serrage selon la revendication 4, **caractérisé en ce que** la languette d'appui (337) est reliée à l'aile externe (332) dans une zone de liaison (337A) distante de la jonction entre les ailes interne (330) et externe (332), et présente une portion courante (337B) qui s'étend depuis ladite zone de liaison (337A) vers ladite jonction (334) et une portion terminale (337C) repliée dans l'espace interne (321) du clip.

7. Système de serrage selon la revendication 3, **caractérisé en ce que** la languette d'appui (137) est découpée dans l'aile interne (130) et fait saillie dans l'espace interne (121) du clip (120) entre les ailes interne et externe, au moins par son extrémité libre.

8. Système de serrage selon la revendication 7, **caractérisé en ce que** l'extrémité libre de la languette d'appui (137) est recourbée vers l'aile interne (130) et est apte à coopérer avec la première surface d'appui (13'A) du collier par une surface issue de la face de l'aile interne opposée à l'aile externe.

9. Système de serrage selon la revendication 1, **caractérisé en ce que** l'aile interne (430) d'au moins l'un des clips (420) présente une portion d'extrémité libre, recourbée vers l'intérieur et formant la première zone d'appui (436) apte, par sa surface externe, à coopérer avec le fond (14A) du renfoncement interne (14) de la bande sur lequel est formée la première surface d'appui du collier.

10. Système de serrage selon l'une quelconque des revendications 3 à 8, **caractérisé en ce que** l'aile interne (430) présente une portion d'extrémité libre, recourbée vers l'intérieur et formant une deuxième zone d'appui (436) apte, par sa surface externe, à coopérer avec le fond (14A) du renfoncement interne (14) de la bande sur lequel est formée une deuxième surface d'appui du collier.

11. Système de serrage selon l'une quelconque des revendications 1 à 10, **caractérisé en ce que** l'aile externe (232 ; 332 ; 532) d'au moins l'un des clips (220 ; 320 ; 520) présente une portion d'extrémité libre (232 ; 332 ; 532), recourbée vers l'intérieur et apte à coiffer la zone de jonction (13') entre les premier et deuxième flancs (13A, 13B) de la bande (12).

12. Système de serrage selon l'une quelconque des revendications 1 à 11, **caractérisé en ce que** l'aile interne (30 ; 430) d'au moins l'un des clips (20 ; 420) présente, à distance de son raccordement avec l'aile externe (32 ; 432) une portion de pincement (31' ; 431') ramenée vers l'aile externe.

13. Système de serrage selon la revendication 12, **caractérisé en ce que** la portion de pincement est formée par une languette de pincement (531'), découpée dans l'aile interne (530) et formant également la première zone d'appui qui coopère avec la surface interne du premier flanc (13A) sur laquelle est formée la première surface d'appui du collier, la languette de pincement étant en particulier tournée à l'opposé de l'axe (A) du collier.

14. Système de serrage selon l'une quelconque des revendications 1 à 13, **caractérisé en ce que** la portion de retenue (34 ; 134 ; 234 ; 334 ; 434) d'au moins l'un des clips est formée à la jonction des ailes interne et externe.

15. Système de serrage selon l'une quelconque des revendications 1 à 13, **caractérisé en ce que** la portion de retenue d'au moins l'un des clips (520) est formée par une languette de retenue (534) portée par l'aile interne (530), en étant en particulier reliée à un bord latéral (535) de ladite aile interne, et repliée vers l'axe (A) du collier.

16. Système de serrage selon l'une quelconque des revendications 1 à 15, **caractérisé en ce qu'**il comporte des moyens (22 ; 550) pour, à l'état pré-monté du collier (10) sur le premier tube (1 ; 1'), limiter le déplacement du collier par rapport au premier tube dans le sens s'éloignant de l'extrémité libre dudit premier tube pourvue de la surface de serrage de ce premier tube.

17. Système de serrage selon la revendication 16, **caractérisé en ce qu'**il comporte un organe de limitation du déplacement, en particulier une rondelle (22), porté par le deuxième flanc (13B).

18. Système de serrage selon la revendication 16, **caractérisé en ce que** l'aile interne d'au moins l'un des clips (520) présente un rebord transversal (550) en saillie vers l'axe (A) du collier.

19. Système de serrage selon l'une quelconque des revendications 1 à 18, **caractérisé en ce que** l'aile interne (32 ; 132 ; 232) d'au moins l'un des clips (20 ; 20' ; 120 ; 220) présente un ergot d'agrippement (38 ; 138 ; 238) en saillie dans l'espace interne du clip entre les ailes interne et externe.

## Patentansprüche

1. Spannsystem zur dichten Verbindung von zwei Rohren (1, 2; 1', 2'), deren gegenüberliegende Enden Spannflächen (1A, 2A; 1'A, 2'A) aufweisen, die von der zylindrischen Außenfläche der Rohre hervorstehen, wobei das System eine Schelle (10) mit einem Band (12), das mit den Spannflächen zusammenwirken kann, und Mittel (12A, 12B, 16, 18) zum Spannen des Bandes aufweist, wobei das Band eine erste und eine zweite Seitenwand (13A, 13B) aufweist, zwischen denen eine innere Ausnehmung (14) zur Aufnahme der Spannflächen begrenzt ist,
**dadurch gekennzeichnet, dass** es eine Mehrzahl von einzelnen Halteklammern (20; 20'; 120; 220; 320; 420; 520) umfasst, die auf der ersten Seitenwand (13A) winklig verteilt sind, wobei jede Klammer einen Innenflügel (30; 30'; 130; 230; 230; 330; 430; 530) und einen Außenflügel (32; 32'; 132; 232; 332; 432; 532) aufweist, die sich gegenüberliegen und zwischen denen die erste Seitenwand eingeklemmt ist, sowie einen Halteabschnitt (34; 34'; 134; 234; 334; 434; 534), der radial nach innen zeigt, wobei einer der Flügel eine erste Auflagezone (36; 36'; 136; 236; 336; 436; 436'; 531') trägt, die mit einer ersten Auflagefläche (13'A; 14'A) der Schelle, die der Achse derselben zugewandt ist, zusammenwirkt, um die Klammer zur Achse (A) der Schelle elastisch zurückzuholen, sodass der Halteabschnitt in der Lage ist, mit der Spannfläche (1A; 1'A) des ersten Rohres (1; 1') zusammenzuwirken, um die Schelle in einem vormontierten Zustand auf diesem Rohr zu halten, indem die Verschiebung der Schelle relativ zu dem ersten Rohr in Richtung auf das freie Ende des ersten Rohres, das mit der Spannfläche dieses ersten Rohres versehen ist, begrenzt wird.

2. Spannsystem gemäß Anspruch 1, **dadurch gekennzeichnet, dass** die erste Auflagefläche der Schelle (10) an der Innenkante (13'A) der ersten Seitenwand (13A) ausgebildet ist.

3. Spannsystem gemäß Anspruch 1 oder 2, **dadurch gekennzeichnet, dass** für mindestens eine der Klammern (20; 20'; 120; 220; 320; 420) die erste Auflagezone (36; 36'; 136; 236; 336; 436; 436'; 531') auf einer Auflagelasche (37; 37'; 137; 137; 237; 337) ausgebildet ist, die aus einem der Innen- und Außenflügel herausgeschnitten ist.

4. Spannsystem gemäß Anspruch 3, **dadurch gekennzeichnet, dass** die Auflagelasche (37; 37'; 137; 237; 337) aus dem Außenflügel herausgeschnitten ist und zumindest durch ihr freies Ende in den Innenraum der Klammer zwischen Innen- und Außenflügel ragt.

5. Spannsystem gemäß Anspruch 4, **dadurch gekennzeichnet, dass** die Auflagelasche (37; 37'; 237) mit dem Außenflügel in der Nähe der Verbindung zwischen Innen- und Außenflügel verbunden ist.

6. Spannsystem gemäß Anspruch 4, **dadurch gekennzeichnet, dass** die Auflagelasche (337) mit dem Außenflügel (332) in einer Verbindungszone (337A) verbunden ist, die von der Verbindung zwischen dem Innenflügel (330) und dem Außenflügel (332) entfernt ist, und einen laufenden Abschnitt (337B), der sich von der Verbindungszone (337A) zu der Verbindung (334) erstreckt, und einen Endabschnitt (337C), der in den Innenraum (321) der Klammer gebogen ist, aufweist.

7. Spannsystem gemäß Anspruch 3, **dadurch gekennzeichnet, dass** die Auflagelasche (137) aus dem Innenflügel (130) herausgeschnitten ist und zumindest durch ihr freies Ende in den Innenraum (121) der Klammer (120) zwischen Innen- und Außenflügel ragt.

8. Spannsystem gemäß Anspruch 7, **dadurch gekennzeichnet, dass** das freie Ende der Auflagelasche (137) zum Innenflügel (130) hin gekrümmt ist und mit der ersten Auflagefläche (13'A) der Schelle durch eine Fläche zusammenwirken kann, die sich von der dem Außenflügel gegenüberliegenden Fläche des Innenflügels erstreckt.

9. Spannsystem gemäß Anspruch 1, **dadurch gekennzeichnet, dass** der Innenflügel (430) mindestens einer der Klammern (420) einen nach innen gekrümmten freien Endabschnitt aufweist, der die erste Auflagezone (436) bildet, die durch ihre Außenfläche mit dem Boden (14A) der inneren Ausnehmung (14) des Bandes zusammenwirken kann, auf der die erste Auflagefläche der Schelle ausgebildet ist.

10. Spannsystem gemäß einem der Ansprüche 3 bis 8, **dadurch gekennzeichnet, dass** der Innenflügel (430) einen nach innen gekrümmten freien Endabschnitt aufweist, der eine zweite Auflagezone (436) bildet, die durch ihre Außenfläche mit dem Boden (14A) der inneren Ausnehmung (14) des Bandes zusammenwirken kann, auf der die zweite Auflagefläche der Schelle ausgebildet ist.

11. Spannsystem gemäß einem der Ansprüche 1 bis 10, **dadurch gekennzeichnet, dass** der Außenflügel (232; 332; 532) mindestens einer der Klammern (220; 320; 520) einen freien Endabschnitt (232; 332; 532) aufweist, der nach innen gekrümmt ist und die Verbindungszone (13') zwischen der ersten und der zweiten Seitenwand (13A, 13B) des Bandes (12) abdecken kann.

12. Spannsystem gemäß einem der Ansprüche 1 bis 11, **dadurch gekennzeichnet, dass** der Innenflügel (30; 430) mindestens einer der Klammern (20; 420) in einem Abstand von seiner Verbindung mit dem Außenflügel (32; 432) einen zum Außenflügel zurückgeführten Klemmabschnitt (31'; 431') aufweist.

13. Spannsystem gemäß Anspruch 12, **dadurch gekennzeichnet, dass** der Klemmabschnitt durch eine Klemmlasche (531') gebildet ist, die aus dem Innenflügel (530) herausgeschnitten ist und auch die erste Auflagezone bildet, die mit der Innenfläche der ersten Seitenwand (13A) zusammenwirkt, auf der die erste Auflagefläche der Schelle ausgebildet ist, wobei die Klemmlasche insbesondere von der Achse der Schelle weggedreht ist.

14. Spannsystem gemäß einem der Ansprüche 1 bis 13, **dadurch gekennzeichnet, dass** der Halteabschnitt (34; 134; 234; 334; 434) mindestens einer der Klammern an der Verbindung von Innen- und Außenflügel ausgebildet ist.

15. Spannsystem gemäß einem der Ansprüche 1 bis 13, **dadurch gekennzeichnet, dass** der Halteabschnitt mindestens einer der Klammern (520) durch eine Haltelasche (534) gebildet ist, die von dem Innenflügel (530) getragen wird, wobei sie insbesondere mit einem seitlichen Rand (535) des Innenflügels verbunden und zur Achse (A) der Schelle hin gebogen ist.

16. Spannsystem gemäß einem der Ansprüche 1 bis 15, **dadurch gekennzeichnet, dass** es Mittel (22; 550) umfasst, um im vormontierten Zustand der Schelle (10) auf dem ersten Rohr (1; 1') die Verschiebung der Schelle relativ zum ersten Rohr in der sich von dem freien Ende des ersten Rohres, das mit der Spannfläche dieses ersten Rohres versehen ist, erstreckenden Richtung zu begrenzen.

17. Spannsystem gemäß Anspruch 16, **dadurch gekennzeichnet, dass** es ein von der zweiten Seitenwand (13B) getragenes Verschiebungsbegrenzungselement, insbesondere eine Scheibe (22), umfasst.

18. Spannsystem gemäß Anspruch 16, **dadurch gekennzeichnet, dass** der Innenflügel mindestens einer der Klammern (520) eine zur Achse (A) der Schelle vorstehende Querkante (550) aufweist.

19. Spannsystem nach einem der Ansprüche 1 bis 18, **dadurch gekennzeichnet, dass** der Innenflügel (32; 132; 232) mindestens einer der Klammern (20; 20'; 120; 220) einen in den Innenraum der Klammer zwischen Innen- und Außenflügel ragenden Griffzapfen (38; 138; 238) aufweist.

## Claims

1. A clamping system for connecting two tubes (1, 2; 1', 2') together in sealed manner, the facing ends of the two tubes having clamping surfaces (1A, 2A; 1'A, 2'A) that project relative to the cylindrical outside surfaces of said tubes, the system comprising a collar (10) having a band (12) suitable for co-operating with said clamping surfaces and means (12A, 12B, 16, 18) for tightening said band, the band having a first flank (13A) and a second flank (13B) between which an inside trough (14) is defined that is suitable for receiving the clamping surfaces;
said clamping system being **characterized in that** it further comprises a plurality of individual retaining clips (20; 20'; 120; 220; 320; 420; 520) distributed angularly around the first flank (13A), each clip having an inside branch (30; 30'; 130; 230; 330; 430; 530) and an outside branch (32; 32'; 132; 232; 332; 432; 532) facing each other, the first flank being pinched between said inside branch and said outside branch, each clip further having a retaining portion (34; 34'; 134; 234; 334; 434; 534) situated radially further towards the inside, one of said inside and outside branches carrying a first bearing zone (36; 36'; 136; 236; 336; 436; 436'; 531') that co-operates with a first bearing surface (13'A; 14'A) of the collar that faces towards the axis of said collar, for resiliently urging the clip back towards the axis (A) of the collar in such a manner that the retaining portion is suitable for co-operating with the clamping surface (1A; 1'A) of the first tube (1; 1') to retain the collar in a pre-attached state in which it is pre-attached to said tube while limiting movement of the collar relative to the first tube in the direction going towards the free end of said first tube, which end is provided with the clamping surface of said first tube.

2. A clamping system according to claim 1, **characterized in that** the first bearing surface of the collar (10) is formed on the inside edge (13'A) of the first flank (13A).

3. A clamping system according to claim 1 or claim 2, **characterized in that**, for at least one of the clips (20; 20'; 120; 220; 320; 420), the first bearing zone (36; 36'; 136; 236; 336; 436'; 531') is formed on a bearing tongue (37; 37'; 137; 237; 337) cut out from one of the inside and outside branches.

4. A clamping system according to claim 3, **characterized in that** the bearing tongue (37; 37'; 137; 237; 337) is cut out from the outside branch and projects into the inside space of the clip between the inside and outside branches, at least via its free end.

5. A clamping system according to claim 4, **characterized in that** the bearing tongue (37; 37'; 237) is connected to the outside branch in the vicinity of the junction where the inside and outside branches meet.

6. A clamping system according to claim 4, **characterized in that** the bearing tongue (337) is connected to the outside branch (332) in a connection zone (337A) remote from the junction where the inside branch (330) and the outside branch (332) meet, and has a running portion (337B) that extends from said connection zone (337A) towards said junction (334) and an end portion (337C) folded over into the inside space (321) of the clip.

7. A clamping system according to claim 3, **characterized in that** the bearing tongue (137) is cut out from the inside branch (130) and projects into the inside space (121) of the clip (120) between the inside and outside branches, at least via its free end.

8. A clamping system according to claim 7, **characterized in that** the free end of the bearing tongue (137) is curved over towards in the inside branch (130) and is suitable for co-operating with the first bearing surface (13'A) of the collar via a surface coming from the face of the inside branch that faces away from the outside branch.

9. A clamping system according to claim 1, **characterized in that** the inside branch (430) of at least one of the clips (420) has a free end portion that is curved over inwards and that forms the first bearing zone (436) that is suitable, via its outside surface, for co-operating with the end-wall (14A) of the inside trough (14) of the band, on which end-wall the first bearing surface of the collar is formed.

10. A clamping system according to any one of claims 3 to 8, **characterized in that** the inside branch (430) has a free end portion that is curved over inwards and that forms a second bearing zone (436) that is suitable, via its outside surface, for co-operating with the end-wall (14A) of the inside trough (14) of the band, on which end-wall the second bearing surface of the collar is formed.

11. A clamping system according to any one of claims 1 to 10, **characterized in that** the outside branch (232; 332; 532) of at least one of the clips (220; 320; 520) has a free end portion (232; 332; 532) that is curved over inwards and that is suitable for covering the junction zone (13') where the first and second flanks (13A, 13B) of the band (12) meet.

12. A clamping system according to any one of claims 1 to 11, **characterized in that**, remotely from where it is connected to the outside branch (32; 432), the inside branch (30; 430) of at least one of the clips (20; 420) has a pinching portion (31'; 431') that comes back towards the outside branch.

13. A clamping system according to claim 12, **characterized in that** the pinching portion is formed by a pinching tongue (531'), cut out from the inside branch (530) and also forming the first bearing zone that co-operates with the inside surface of the first flank (13A) on which the first bearing surface of the collar is formed, the pinching tongue being, in particular, such that it faces away from the axis (A) of the collar.

14. A clamping system according to any one of claims 1 to 13, **characterized in that** the retaining portion (34; 134; 234; 334; 434) of at least one of the clips is formed at the junction where the inside and outside branches meet.

15. A clamping system according to any one of claims 1 to 13, **characterized in that** the retaining portion of at least one of the clips (520) is formed by a retaining tongue (534) carried by the inside branch (530) and folded over towards the axis (A) of the collar, the retaining tongue (534) being, in particular, connected to a side edge (535) of the inside branch.

16. A clamping system according to any one of claims 1 to 15, **characterized in that** it has means (22; 550) for acting, when the collar (10) is in the pre-attached state in which it is pre-attached to the first tube (1; 1'), to limit movement of the collar relative to the first tube in the direction going away from the free end of said first tube, which free end is provided with the clamping surface of said first tube.

17. A clamping system according to claim 16, **characterized in that** it has a movement-limiting member, in particular a washer, carried by the second flank (13B).

18. A clamping system according to claim 16, **characterized in that** the inside branch of at least one of the clips (520) has a transverse flange (550) projecting towards the axis (A) of the collar.

19. A clamping system according to any one of claims 1 to 18, **characterized in that** the inside branch (32; 132; 232) of at least one of the clips (20; 20'; 120; 220) is provided with a holding spur (38; 138; 238) projecting into the inside space of the clip between the inside and outside branches.
